# EUROPEAN PATENT SPECIFICATION

(11) **EP 1 905 258 B1**
(45) Date of publication and mention of the grant of the patent: **18.05.2011**
(21) Application number: 06765989.6
(22) Date of filing: 03.07.2006
(51) Int. Cl.: H04W 16/14

(54) **METHOD AND COMMUNICATION SYSTEM FOR PROTECTING INCUMBENT WIRELESS SERVICES**
VERFAHREN UND KOMMUNIKATIONSSYSTEM ZUM SCHUTZ ETABLIERTER DRAHTLOSER DIENSTE
PROCEDE ET SYSTEME DE COMMUNICATION PERMETTANT DE PROTEGER DES SERVICES SANS FIL ETABLIS

(30) Priority: 12.07.2005 EP 05015063
(43) Date of publication of application: 02.04.2008
(73) Proprietor: NXP B.V., 5656 AG Eindhoven (NL)
(72) Inventor: NITSCHE, Gunnar c/o Philips IP & Standards GmbH, 52066 Aachen (DE)
(74) Representative: Schouten, Marcus Maria
(86) International application number: PCT/IB2006/052230
(87) International publication number: WO 2007/007226

(56) References cited:
- US-A- 5 655 217
- US-A1- 2003 016 771
- US-A1- 2003 181 213

## Description

The invention relates to a method and a communication system for protecting incumbent services wherein in the incumbent services first information is exchanged between first communication means by radio frequency transmission within a first bandwidth using a first protocol and second information is exchanged between second communication means by radio frequency transmission within a second bandwidth using a second protocol and the second bandwidth is overlapping and larger than the first bandwidth.

New wireless applications (so-called secondary services) are coming up that reuse spectrum that is already allocated for other applications, the so-called incumbent (or primary) services. Examples are WLAN (Wireless LAN) in the 5 GHz band and UWB (Ultra Wideband). Since the incumbent services are typically licensed and the new application license exempt, the former need to be protected from interference by the latter. This is particular complicated for UWB, which may operate from 3.1 to 10.6 GHz, since many incumbent services may be affected.

The US Patent Application 2004/0199686 A1 relates to a wireless communication of communication devices within a piconet. Particularly it relates for avoiding an interference of competing devices within the piconet. This publication does not solve the above mentioned problem.

The US Patent Application 2005/0083896 A1 describes the coexistence of multiple piconets such as UWB. This description does not eliminate any interference to other nets or wireless services.

The GB Patent 2399475 A relates to avoidance of interference between cellular phone network and UWB. This is solved by a time division.

A scheme to distribute regulatory information such as allowed channels and maximum transmit power is described in IEEE 802.11d-2001: Specification for Operation in Additional Regulatory Domains (http://standards.ieee.org/getieee802/download/802.11d-2001pdf).

A scheme to protect radars, which are important incumbent services in the 5 GHz band, from WLAN interference, is described in IEEE 802.11h-2003: Spectrum and Transmit Power Management Extensions in the 5GHz band in Europe (http://standards.ieee.org/getieee802/download/802.11h-2003.pdf).

The MBOA proposed UWB system is described in IEEE P802.15-04/0493rl: "Multi-band OFDM Physical Layer Proposal for IEEE 802.15 Task Group 3a" (ftp://ieee:wireless@ftp.802wirelessworld.com/15/04/15-04-0493-01-003a-multi-band-ofdm-cfp-document-update.zip).

In order to obtain a useful range, UWB systems need to operate at transmit power levels (the FCC allows -41.3 dBm/MHz) that might cause interference to incumbent services in certain situations.

In US 5,655,217 a network based communication system is disclosed that cedes use of a portion of the frequency spectrum shared in common with an incumbent radio system to the radio system. The radio system is not configured for exchanging information. Rather, incumbent radio system is disclosed as a broadcast system which sends information to a receiver. An information exchange, which also comprises sending information from a receiver to the sender is not provided. Such radio systems may have a a definition how the signals have to be configured to be understandable by the receiver. However, signals of radio systems may be of different nature, e.g. as signals from a radio transmitter or from a television transmitter. Due to the plurality of radio systems the communication system does not know which frequencies are used. The used frequencies and their level are measured, and the corresponding transmission frequencies are inhibited for transmission within the communications network.

As disclosed in US 2003/0181213 A1, protecting information is exchanged between the participants in several communication systems by an ad hoc control channel (ACC). The transmission of the information is carried out with a special ACC protocol. This requires that all participants have to be able to communicate via two protocols, the communication protocol and the ACC protocol. The requirement of implementing two protocols in every participant is a disadvantage.

The problem to be solved is to reduce or to eliminate an interference of secondary services to incumbent services.

The problem is solved by a method according to claim 1. Preferred versions of the method are claimed in claims 2 to 9.

The problem is also solved by a communication system according to claim 10. Preferred embodiments of the communication system are claimed in claims 11 to 18.

In order to obtain a useful range secondary services for exchanging first information need to operate at transmit power levels that might cause interference to incumbent services exchanging second information in certain situations.

Typically, the secondary service uses a bandwidth that is multiple larger than the incumbent service, so the interference can be much reduced if the secondary service avoids transmitting in the small band used by the incumbent service (notching), without significant reduction of the secondary service performance.

A problem is to know which frequencies have to be notched. The autodetection of some incumbent services, e.g. the downlink of fixed wireless access, is very difficult due to the low receiving signal levels.

This invention overcomes the autodetection problem by introducing a new signalling scheme that is used to "tell" second communication means which frequencies have to be notched. It is assumed that at least one of the second communications means, e.g. in a UWB piconet, is rather stationary, e.g. a PC or TV set, so it is able to know the local incumbent services to be protected and it distributes this information to the other second communication means.

It is expected that at least one of the second communication means "knows" the protection information. Possibilities where this knowledge is coming from are factory configuration, autodetection or hand configuration by the user.

In the following the invention is described by an example. In the drawings shows
Fig. 1 a Subcarrier range format and
Fig. 2 a 2-Protection Information Element format.

For secondary services there are several UWB protocols proposed. This invention is applicable to all of these.

As example embodiment, the WiMedia/MBOA MAC protocol is chosen (MBOA Draft MAC Standard 0.95, April 11, 2005).

In section 7.8 of this standard, several information elements (IEs) are specified that may be present in management frames. In order to implement this invention, a new IE "Protection IE" has to be added, which shall be used in Beacon and Probe Response frames if protection information is available.

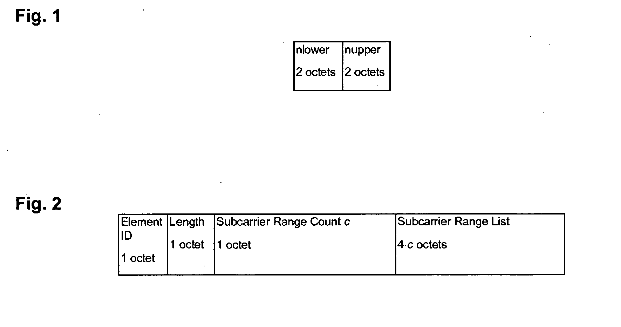

Since WiMedia/MBOA is based on OFDM, it is preferable to specify frequency ranges in OFDM subcarrier numbers instead of absolute frequencies as shown in Fig. 1. The frequency (f) / subcarrier (n) relation can be defined as f= 3168 MHz + n * 4.125 MHz, where n = 0, 1, ..., 1792.

Subcarriers from nlower to nupper shall be nulled (notched).

For non-OFDM systems, it is preferable to specify frequency ranges in absolute frequencies.

Fig. 2 shows a 2-Protection Information Element format. The terminal as communication means receiving this Information Element shall avoid transmitting on all subcarriers specified in the Subcarrier Range List.

A possible Protection Information Element format is given in Figures 1 and 2.

A further advantage of this invention is that the notching information can also be used by the receiver, which can improve its decoding performance by ignoring the notched subcarriers.

A major application for UWB is expected to be WUSB, the wireless extension of USB. As wired USB, this application is PC centric, so in many cases it will be controlled by a stationary desktop PC, which is likely to know the local incumbent services to be protected.

## Claims

1. Method for protecting incumbent services wherein in the incumbent services first information is exchanged between first communication means by radio frequency transmission within a first bandwidth using a first protocol and second information is exchanged between plural second communication means by radio frequency transmission within a second bandwidth using a second protocol and the second bandwidth is overlapping and larger than the first bandwidth, the method comprising the steps of:
- ascertaining the presence of any first information exchange between said first communication means;
- transmitting a protecting information at least about the presence of a first information exchange to at least one of the second communication means, wherein the protecting information is placed and transmitted within the second protocol;
- inhibiting said at least one of the second communication means from using the radio frequencies used for exchanging the first information for transmitting the second information and
- transmitting the second communication within a frequency range wherein the radio frequencies used for transmitting the second information are notched at the radio frequencies used for exchanging the first information.

2. Method according to claim 1, wherein the protecting information is transmitted from one of the second communication means to the other second communication means.

3. Method according to claim 2 wherein said one of the second communication means is a stationary station.

4. Method according to one of the claims 1 to 3 further comprising the steps
- assessing the radio frequencies used for the first information exchange and
- transmitting the assessed result as protecting information.

5. Method according to one of the claims 1 to 4 wherein the inhibited frequencies are predetermined within the at least one of the second communication means and are selected corresponding to the protecting information.

6. Method according to one of the claims I to 4 wherein the inhibited frequencies are autodetected by one of the second communication means.

7. Method according to one of the claims 1 to 4 wherein the inhibited frequencies are adjusted by the user of one of the second communication means.

8. Method according to one of the claims 1 to 7 wherein the second information exchange is carried out in Ultra Wideband.

9. Method according to one of the claims 1 to 7 wherein the second information exchange is carried out in WLAN.

10. Communication system for protecting incumbent services comprising first communication means for exchanging first information by radio frequency transmission within a first bandwidth using a first protocol and second communication means for exchanging second information between plural second communication means by radio frequency transmission within a second bandwidth using a second protocol, the second bandwidth overlapping and larger than the first bandwidth, the second communication means comprising means for ascertaining the presence of any first information exchange between said first communication means, the first communication means comprising means for transmitting a protecting information at least about the presence of a first information exchange to at least one of the second communication means, wherein the first communication means is configured to process the second protocol to include and transmit the protecting information within the second protocol, the second communication means provided with means for inhibiting the usage of the radio frequencies used for exchanging the first information for transmitting the second information, the second communication means configured to transmit the second communication within a frequency range wherein the radio frequencies used for transmitting the second information are notched at the radio frequencies used for exchanging the first information.

11. Communication system according to claim 10 wherein one of the second communication means is configured to transmit the protecting information to another of the second communication means.

12. Communication system according to claim 11 wherein one of the second communication means is a stationary station.

13. Communication system according to one of the claims 10 to 12 further comprising means for
- assessing the radio frequencies used for the first information exchange and
- transmitting the assessed result as protecting information.

14. Communication system according to one of the claims 10 to 13 wherein at least one of the second communication means is configured with predetermined frequencies of the first information exchange for selecting as inhibited frequencies corresponding to the protecting information.

15. Communication system according to one of the claims 10 to 13 wherein at least one of the second communication means is provided with means for autodetecting the inhibited frequencies.

16. Communication system according to one of the claims 10 to 13 wherein at least one of the second communication means is provided with means for adjusting the inhibited frequencies by the user.

17. Communication system according to one of the claims 10 to 16 wherein the second communication means are members of Ultra Wideband.

18. Communication system according to one of the claims 10 to 16 wherein the second communication means are members of WLAN.

## Patentansprüche

1. Verfahren zum Schützen von etablierten Diensten, wobei in den etablierten Diensten eine erste Information zwischen ersten Kommunikationsmitteln durch Hochfrequenzübertragung innerhalb einer ersten Bandbreite unter Verwendung eines ersten Protokolls ausgetauscht wird und zweite Information zwischen mehreren zweiten Kommunikationsmitteln durch Hochfrequenzübertragung innerhalb einer zweiten Bandbreite unter Verwendung eines zweiten Protokolls ausgetauscht wird und die zweite Bandbreite die erste Bandbreite überlappt und größer als diese ist, das Verfahren enthaltend die Schritte:
Sicherstellen des Vorliegens von irgendeinem ersten Informationsaustausch zwischen den ersten Kommunikationsmitteln;
Übertragen einer Schutzinformation mindestens über das Vorliegen eines ersten Informationsaustauschs an mindestens eines der zweiten Kommunikationsmittel, wobei die Schutzinformation innerhalb des zweiten Protokolls platziert und übertragen wird;
Hindern des mindestens einen der zweiten Kommunikationsmittel an dem Verwenden der Hochfrequenzen, die für das Austauschen der ersten Information verwendet werden, für das Übertragen der zweiten Information und
Übertragen der zweiten Kommunikation innerhalb eines Frequenzbereichs, wobei die Hochfrequenzen, die zum Übertragen der zweiten Information verwendet werden, bei den Frequenzen, die für das Austauschen der ersten Information verwendet werden, einen Einschnitt aufweisen.

2. Verfahren nach Anspruch 1, wobei die Schutzinformation von einem der zweiten Kommunikationsmittel zu dem anderen zweiten Kommunikationsmittel übertragen wird.

3. Verfahren nach Anspruch 2, wobei das eine der zweiten Kommunikationsmittel eine stationäre Station ist.

4. Verfahren nach einem der Ansprüche 1 bis 3, ferner enthaltend die Schritte
Beurteilen der Hochfrequenzen, die für den ersten Informationsaustausch verwendet werden und
Übertragen des beurteilten Ergebnisses als Schutzinformation.

5. Verfahren nach einem der Ansprüche 1 bis 4, wobei die verhinderten Frequenzen innerhalb des mindestens einen der zweiten Kommunikationsmittel vorbestimmt sind und entsprechend der Schutzinformation ausgewählt sind.

6. Verfahren nach einem der Ansprüche 1 bis 4, wobei die verhinderten Frequenzen durch eines der zweiten Kommunikationsmittel automatisch ermittelt werden.

7. Verfahren nach einem der Ansprüche 1 bis 4, wobei die verhinderten Frequenzen durch den Benutzer von einem der zweiten Kommunikationsmittel eingestellt sind.

8. Verfahren nach einem der Ansprüche 1 bis 7, wobei der zweite Informationsaustausch in einem Ultrabreitband ausgeführt wird.

9. Verfahren nach einem der Ansprüche 1 bis 7, wobei der zweite Informationsaustausch in WLAN ausgeführt wird.

10. Kommunikationssystem zum Schützen von etablierten Diensten aufweisend erste Kommunikationsmittel zum Austauschen von erster Information durch Hochfrequenzübertragung innerhalb einer ersten Bandbreite unter Verwendung eines ersten Protokolls, und zweite Kommunikationsmittel zum Austauschen von zweiter Information zwischen mehreren zweiten Kommunikationsmitteln durch Hochfrequenzübertragung innerhalb einer zweiten Bandbreite unter Verwendung eines zweiten Protokolls, wobei die zweite Bandbreite die erste Bandbreite überlappt und größer als diese ist, wobei die zweiten Kommunikationsmittel Mittel zum Sicherstellen des Vorliegens von irgendeinem ersten Informationsaustausch zwischen den ersten Kommunikationsmitteln aufweist, wobei die ersten Kommunikationsmittel Mittel zum Übertragen einer Schutzinformation mindestens über das Vorliegen eines ersten Informationsaustausches an mindestens eines der zweiten Kommunikationsmittel aufweist, wobei das erste Kommunikationsmittel konfiguriert ist zum Prozessieren des zweiten Protokolls zum Einschließen und Übertragen der Schutzinformation innerhalb des zweiten Protokolls, wobei die zweiten Kommunikationsmittel ausgestattet sind mit Mitteln zum Verhindern des Verwendens der Hochfrequenzen, die zum Austauschen der ersten Information verwendet werden, zum Übertragen der zweiten Information, wobei die zweiten Kommunikationsmittel konfiguriert sind zum Übertragen der zweiten Kommunikation innerhalb eines Frequenzbereiches, wobei die Hochfrequenzen, die für das Übertragen der zweiten Information verwendet werden, bei Hochfrequenzen, die zum Austauschen der ersten Information verwendet werden, einen Einschnitt aufweisen.

11. Kommunikationssystem gemäß Anspruch 10, wobei eines von den zweiten Kommunikationsmitteln konfiguriert ist zum Übertragen der Schutzinformation an ein anderes der zweiten Kommunikationsmittel.

12. Kommunikationssystem nach Anspruch 11, wobei eines der zweiten Kommunikationsmittel eine stationäre Station ist.

13. Kommunikationssystem gemäß einem der Ansprüche 10 bis 12, ferner enthaltend Mittel zum
Beurteilen der Hochfrequenzen, die für den ersten Informationsaustausch verwendet werden und
Übertragen des beurteilten Ergebnisses als Schutzinformation.

14. Kommunikationssystem gemäß einem der Ansprüche 10 bis 13, wobei mindestens eines der zweiten Kommunikationsmittel konfiguriert ist mit vorbestimmten Frequenzen des ersten Informationsaustausches zum Auswählen als verhinderte Frequenzen entsprechend der Schutzinformation.

15. Kommunikationssystem gemäß einem der Ansprüche 10 bis 13, wobei mindestens eines von den zweiten Kommunikationsmitteln mit Mitteln zum automatischen Ermitteln der verhinderten Frequenzen ausgestattet ist.

16. Kommunikationssystem gemäß einem der Ansprüche 10 bis 13, wobei mindestens eines von den zweiten Kommunikationsmitteln ausgestattet ist mit Mitteln zum Einstellen der verhinderten Frequenzen durch einen Benutzer.

17. Kommunikationssystem gemäß einem der Ansprüche 10 bis 16, wobei die zweiten Kommunikationsmittel Ultrabreitbandelemente sind.

18. Kommunikationssystem gemäß einem der Ansprüche 10 bis 16, wobei die zweiten Kommunikationsmittel WLAN-Elemente sind.

## Revendications

1. Procédé de protection de services existants, dans lequel dans les services existants, des premières informations sont échangées entre des premiers moyens de communication utilisant une transmission radiofréquence dans une première bande passante en utilisant un premier protocole, et des deuxièmes informations sont échangées entre plusieurs deuxièmes moyens de communication utilisant une transmission radiofréquence dans une deuxième bande passante en utilisant un deuxième protocole, la deuxième bande passante étant en recouvrement et étant plus large que la première bande passante, le procédé comprenant les étapes suivantes :
- détermination de la présence d'un quelconque premier échange d'information entre lesdits premiers moyens de communication ;
- transmission d'une information de protection relative au moins à la présence d'un premier échange d'information à au moins un des deuxièmes moyens de communication, dans lequel l'information de protection est placée et transmise dans le deuxième protocole,
- inhibition de l'utilisation, par ledit moyen au moins parmi les deuxièmes moyens de communication pour transmettre les deuxièmes informations, des radiofréquences utilisées pour échanger les premières informations et
- transmission de la deuxième communication dans une plage de fréquences, dans laquelle les radiofréquences utilisées pour transmettre les deuxièmes informations sont échancrées aux radiofréquences utilisées pour l'échange des premières informations.

2. Procédé selon la revendication 1, dans lequel les informations de protection sont transmises de l'un des deuxièmes moyens de communication à l'autre des deuxièmes moyens de communication.

3. Procédé selon la revendication 2, dans lequel ledit moyen de communication parmi les deuxièmes moyens de communications est une station stationnaire.

4. Procédé selon l'une des revendications 1 à 3 comprenant en outre les étapes suivantes :
- détermination des radiofréquences utilisées pour le premier échange d'informations et
- transmission des résultats de l'évaluation en tant qu'informations de protection.

5. Procédé selon l'une des revendications 1 à 4, dans lequel les fréquences inhibées sont prédéterminées dans l'un des deuxièmes moyens de communication au moins et sont sélectionnées en fonction des informations de protection.

6. Procédé selon l'une des revendications 1 à 4, dans lequel les fréquences inhibées sont auto-détectées par un des deuxièmes moyens de communication.

7. Procédé selon l'une des revendications 1 à 4, dans lequel les fréquences inhibées sont ajustées par l'utilisateur d'un des deuxièmes moyens de communication.

8. Procédé selon l'une des revendications 1 à 7 dans lequel le deuxième échange d'informations est réalisé en Ultra-large bande.

9. Procédé selon l'une des revendications 1 à 7 dans lequel le deuxième échange d'informations est réalisé sur un WLAN.

10. Système de communication pour la protection de services existants, comprenant des premiers moyens de communication pour échanger des premières informations utilisant une transmission radiofréquence dans une première bande passante en utilisant un premier protocole et des deuxièmes moyens de communication pour échanger des deuxièmes informations entre plusieurs deuxièmes moyens de communication utilisant une transmission radiofréquence dans une deuxième bande passante en utilisant un deuxième protocole, la deuxième bande passante étant en recouvrement et étant plus large que la première bande passante, les deuxièmes moyens de communication comprenant des moyens pour déterminer la présence d'un quelconque premier échange d'information entre lesdits premiers moyens de communication, les premiers moyens de communication comprenant des moyens pour transmettre une information de protection relative au moins à la présence d'un premier échange d'information à au moins un des deuxièmes moyens de communication, dans lequel les premiers moyens de communication sont configurés pour traiter le deuxième protocole pour inclure et transmettre les informations de protection dans le deuxième protocole, les deuxièmes moyens de protection étant munis de moyens pour inhiber l'utilisation des radiofréquences utilisées pour échanger les premières informations pour la transmission des deuxièmes informations, les deuxièmes moyens de communications étant configurés pour transmettre la deuxième communication dans une plage de fréquences dans laquelle les radiofréquences utilisées pour transmettre les deuxièmes informations sont échancrées aux radiofréquences utilisées pour l'échange des premières informations.

11. Système de communication selon la revendication 10, dans lequel un des deuxièmes moyens de communication est configuré pour transmettre les informations de protection à un autre des deuxièmes moyens de communication.

12. Système de communication selon la revendication 11, dans lequel un des deuxièmes moyens de communication est une station stationnaire.

13. Système de communication selon l'une des revendications 10 à 12 comprenant en outre des moyens pour :
- déterminer les radiofréquences utilisées pour le premier échange d'informations et
- transmettre les résultats de l'évaluation en tant qu'informations de protection.

14. Système de communication selon l'une des revendications 10 à 13, dans lequel au moins un des deuxièmes moyens de communication est configuré avec des fréquences prédéterminées du premier échange d'informations pour les sélectionner en tant que fréquences inhibées correspondant aux informations de protection.

15. Système de communication selon l'une des revendications 10 à 13, dans lequel au moins un des deuxièmes moyens de communication est muni de moyens pour auto-détecter les fréquences inhibées.

16. Système de communication selon l'une des revendications 10 à 13, dans lequel au moins un des deuxièmes moyens de communication est muni de moyens pour faire ajuster par l'utilisateur les fréquences inhibées.

17. Système de communication selon l'une des revendications 10 à 16 dans lequel les deuxièmes moyens de communication appartiennent à un système Ultra-large bande.

18. Système de communication selon l'une des revendications 10 à 16 dans lequel les deuxièmes moyens de communication appartiennent à un système WLAN.
